Europäisches Patentamt

European Patent Office

Office européen des brevets

(11) Publication number: **0 318 614**
**A1**

## (12) EUROPEAN PATENT APPLICATION

(21) Application number: 87202431.0

(22) Date of filing: 04.12.87

(51) Int. Cl.⁴: **C08L 53/02** , **C08L 23/08** , **C08K 5/00**

(43) Date of publication of application:
07.06.89 Bulletin 89/23

(84) Designated Contracting States:
ES

(71) Applicant: SHELL INTERNATIONALE
RESEARCH MAATSCHAPPIJ B.V.
Carel van Bylandtlaan 30
NL-2596 HR Den Haag(NL)

(72) Inventor: Ito, Hisaharu
11-24, 2-chome Tsukiji
Chuo-ku Tokyo(JP)
Inventor: Morino, Katsuaki
11-24, 2-chome Tsukiji
Chuo-ku Tokyo(JP)
Inventor: Miyachi, Takumi
11-24, 2-chome Tsukiji
Chuo-ku Tokyo(JP)

(74) Representative: Aalbers, Onno et al
P.O. Box 302
NL-2501 CH The Hague(NL)

(54) **Cross-linked polymers.**

(57) Cross-linked polymers obtained by cross-linking in a heat medium a mixture of (A) 40-100% by weight of a block copolymer of an aromatic vinyl compound and a conjugated diene and/or ethylene-vinyl acetate copolymer, and (B) 0-60% by weight of a non-cured rubber chosen from natural rubber, diene-type synthetic rubber and non-diene type synthetic rubber, and, calculated on 100 parts by weight of [(A) + (B)], (C) 0-100 parts by weight of a rubber softener, and (D) 0-600 parts by weight of a filler.

EP 0 318 614 A1

# CROSS-LINKED POLYMERS

The present invention relates to cross-linked polymer compositions and to articles containing such a composition.

Cross-linked rubbers derived from natural rubber, synthetic rubber and 1,2-polybutadiene (PBD) are well-known, particularly cross-linked rubbers vulcanized with a large quantity of sulphur in order to obtain a product with great hardness (ebonite blends). However, almost all of these are prepared by a method in which a metal mould is used to obtain the desired cross-linked shape.

Experiments have been carried out on methods of preparing rubber of great hardness by means of heat medium cross-linking without the need of a metal mould, both with natural rubber and synthetic rubber. However, albeit that the natural and synthetic rubbers obtained by such known method were very hard, they were not satisfactory in that their shape could be no other than a level sheet during cross-linking.

Cross-linked polymer compositions have now been found which have an excellent mouldability during cross-linking - that is to say their ability to follow the shape of a mould is extremely good - and yet have a very high hardness.

The present invention provides cross-linked polymer compositions characterized in that they have been obtained by cross-linking in a heat medium of a mixture comprising

(A) in the range of from 40 to 100% by weight of a block copolymer of an aromatic vinyl compound and a conjugated diolefin and/or an ethylene-vinyl acetate copolymer and

(B) in the range of from 0 to 60% by weight of a non-cured rubber chosen from natural rubber, diene-type synthetic rubber and non-diene-type synthetic rubber,

the sum of the percentages of (A) and (B) being 100, and, calculated on 100 parts by weight of mixture [(A) + (B)],

(C) in the range of from 0 to 100 part by weight of a rubber softener and

(D) in the range of from 0 to 600 part by weight of a filler.

Since the cross linking is effected by means of a heat medium, costly metal moulds or presses are not needed, while the cross-linking of very long objects, which could thus far not be achieved with metal moulds, has become possible.

The aromatic vinyl compound-conjugated diene block copolymer used in the present invention as component (A) contains at least one polymer block of an aromatic vinyl compound and at least one polymer block of a conjugated diolefin and may be linear or radial. It may also be a random copolymer of an aromatic vinyl compound with a small quantity of conjugated diene block, or a so-called tapered block with the aromatic vinyl compound content gradually increasing.

The structure of the block copolymer is not bound to specific limitations, the configurations $(A-B)_n$, $(A-B)_n-A$ and $(A-B)_n-C$ may all be used, in which formulae A represents the aromatic vinyl compound polymer block, B represents the conjugated diene polymer block, C represents a coupling agent residue, and n is an integer higher than 1. Naturally, the conjugated diene part in the block copolymer may also be hydrogenated.

The aromatic vinyl compound in the aromatic vinyl compound-conjugated diene block copolymer used may be, for example, styrene, $\alpha$-methylstyrene, o-methylstyrene, m-methylstyrene, p-methylstyrene, or vinylnaphthalene, styrene being particularly preferred, and the conjugated diene used may be, for example, 1,3-butadiene, isoprene or piperylene, special preference being given to 1,3-butadiene and isoprene.

The weight average molecular weight of the block copolymers is preferably 10 000-800 000, more preferably 50 000-500 000. The content of aromatic vinyl compound present in the block copolymer is preferably 5-60% by weight (%w), more preferably 20-50% by weight (%w).

In order to obtain moderate hardness and mouldability during cross-linking, the content of vinyl acetate bonds in the ethylene-vinyl acetate copolymer (EVA) mentioned under (A) is preferably in the range of from 5 to 45 %, more preferably 10 to 30% by weight, the melt flow index (190$^\circ$ C, 2160 g) is preferably in the range of from 0.2 to 50 g/10 min, more preferably 0.5 to 20 g/10 min.

The block copolymer of aromatic vinyl compound and conjugated diolefin and/or the ethylene-vinyl acetate copolymer mentioned under (A) are (is) used in a quantity in the range of from 100 to 40 %w, in order to obtain moderate hardness and superior mouldability during cross-linking. Preferably the quantity used is in the range of from 100 to 70 %w. Less than 40 %w of (A) leads to poor mouldability.

Non-cured rubber, which is component (B) in the invention, is used in a quantity in the range of from 0 to 60 %w, preferably 0 to 30 %w, in order to improve mixing and kneading properties and to control hardness. Examples that may be mentioned are such diene-type synthetic rubbers as natural rubber (NR), polyisoprene rubber (IR), styrene-butadiene rubber (SBR), polybutadiene rubber (BR), 1,2-polybutadiene, acrylonitrile rubber (NBR), chloroprene rubber (CR) and such non-diene-type synthetic rubbers as ethylene-propylene rubber (EPR), acryl-type rubbers (ACM, ANM), fluorine rubber, with NR, IR, SBR, BR and 1,2-polybutadiene being preferred.

When 1,2-polybutadiene is used and cross-linking is brought about by an organic peroxide, the amount of organic peroxide may be reduced on account of the excellent reactivity of 1,2-polybutadiene.

The rubber softener which is used as component (C) in the present invention is usually derived from a mineral oil and is referred to as process oil or extender oil; it is preferably a mixture containing aromatic rings, naphthene rings and paraffin chains. The mixture is called paraffinic if the paraffin chains hold more than 50% of all the carbon atoms present, naphthenic when in the range of from 30 to 45% of all the carbon atoms is comprised in naphthenic rings and aromatic when more than 30% of all the carbon atoms is comprised in aromatic rings. With regard to their solubility in component (A), mineral oil-type rubber softeners used as component (C) in the present invention are preferably naphthenic or aromatic according to the afore-mentioned classification.

The quantity in which the softener is present as the component (C) is in the range of from 0 to 100 part by weight (pbw), preferably 5 to 30 pbw, calculated on 100 pbw component [(A) + (B)]. When more than 100 pbw of softener is present, it will be difficult to obtain a cross-linked product with a high degree of hardness and its mixing and kneading properties will be poor.

As the filler, component (D) in the present invention, may be used for instance light calcium carbonate, heavy calcium carbonate, various kinds of surface treated calcium carbonates, and talc, magnesium hydroxide, mica, clay, barium sulphate, natural silicic acids, synthetic silicic acids, titania, glass fiber, carbon fiber, cotton flocs and various carbon blacks. Of these fillers, heavy calcium carbonate, light calcium carbonate and talc are economically advantageous.

The quantity of filler used is in the range of from 0 to 600 pbw, preferably 0 to 400 pbw, calculated on 100 pbw component [(A) + (B)]. When more than 600 pbw is blended in, this will lead to poor mixing and kneading properties and a remarkable loss of mechanical strength of the cross-linked product.

For the manufacture of the cross-linked polymer composition according to the present invention, the afore-mentioned ingredients (A)-(D) for cross-linking may be iradiated with such rays as ultraviolet rays and X-rays, but a blend with sulphur and an organic peroxide is preferred.

Prior to cross-linking, the hardness of the afore-mentioned ingredients (A)-(D) is in the range of from 40 to 95, preferably 42 to 90, according to the JIS-A hardness test.

According to the present invention, the quantity of cross-linking agent such as sulphur and organic peroxide used is not bound to specific limits, but by using a large amount of such cross-linking agents, cross-linked polymer compositions can be manufactured which are very hard.

The preferred hardness of the cross-linked polymer composition obtained by the present invention is more than 55, preferably more than 65 according to the JIS K-6301, JIS-C hardness test.

Cross-linked polymer compositions with such a high level of hardness can effectively be put to a variety of uses in which a high degree of hardness is required, such as in linings, articles for industrial use, various kinds of vibration controllers, reinforcing materials for steel plate, as substitutes for thermo-setting resins.

When sulphur is taken up in the cross-linked polymer compositions, powdered sulphur, precipitated sulphur, colloidal sulphur, surface-treated sulphur may be used. The quantity of sulphur used is 0.1-100 pbw, calculated on 100 pbw component [(A) + (B)], but in order to obtain very hard cross-linked polymer compositions in the range of from 5 to 100 pbw is suitable, more preference being given to 15 to 100 pbw, with a quantity in the range of from 20 to 60 pbw being still more specifically preferred. When the quantity of sulphur used is small this will not lead to the production of a cross-linked polymer composition with a high level of hardness (owing to insufficient eboniting), whilst at a quantity of more than 100 pbw sulphur, the risk of such phenomena as deformation and destruction of the cross-linked product owing to heat of reaction during cross-linking will become greater.

Further, when sulphur is present in the cross-linked polymer composition, a variety of vulcanization accelerators may suitably be added to carry out the cross-linking. Exemplary vulcanization accelerators are tetramethylthiourea disulphide (TMTD), tetramethylthiourea monosulphide (TMTM), N-oxydiethylene-2-benzothiazolyl.sulphenamide (OBS), N-cyclohexyl-2-benzothiazyl.sulphenamide (CBS), dibenzothiazyldisulphide (MBTS), 2-mercaptobenzothiazole (MBT), zinc di-n-butyldithiocarbamate (ZnBDC), zinc dimethyldithiocarbamate (ZnMDC).

When the cross-linked polymer composition includes an organic peroxide, for example dicumyl peroxide, di-t-butyl-peroxy-3,3,5-trimethylcyclohexane, $\alpha,\alpha'$-di-t-butyl-peroxydi-p-diisopropylbenzene, n-butyl-4,4-bis-t-butyl peroxyvalerate, t-butyl peroxybenzoate, t-butyl peroxyisopropylcarbonate and 2,5-dimethyl-2,5-di(t-butylperoxy)hexane may be used. The quantity of organic peroxide used is, for example, in the range of from 0.1 to 15 pbw, calculated on 100 pbw component [(A) + (B)], but in order to obtain a very hard cross-linked polymer composition, in the range of from 0.5 to 15 pbw is suitable, preference being given to 2 to 15 pbw and 4 to 10 pbw being preferred more specifically. When the quantity of organic peroxide used is smaller, the cross-linked polymer composition obtained will not have a high level of hardness, and when the quantity used is higher than 15 pbw, the risk of deformation and destruction during cross-linking becomes greater.

Further, in the case of peroxide cross-linking, various multifunctional monomers may be added simultaneously.

Examples of multifunctional monomers are 1,1,1-tri(hydroxymethyl)propane trimethacrylate, ethylene glycol dimethacrylate, triallyl isocyanurate and diallyl phthalate.

Besides the afore-mentioned additives, other such additives as activators, age resistors, processing aids may suitably be added together with the sulphur and the peroxide, if necessary.

There are no specific restrictions as to the process of mixing the afore-mentioned (A)-(D) and other compounding ingredients; the usual mixing methods for preparing rubber blends, such as the Banbury mixer, pressure kneader, open roll may be applied. After the non-cross linked product thus obtained is shaped into for instance sheets using a calender roll or extruder, it is subjected to cross-linking in a heat medium. For the heat medium, such hot gases as hot air, hot nitrogen, such hot fluids as hot fluid paraffin, such hot fine granules as fine glass beads may be used, a hot gas, and hot air in particular, being preferred. Furthermore, heat may be produced by microwaves. The cross-linking is carried out by heating a heat medium at a temperature in the range of from 120 to 250°C, preferably of 140 to 180°C. During this process there is no particular need for pressure, the cross-linking can be carried out at atmospheric pressure. During cross-linking, a wooden, a clay or metal mould may be used to prepare the desired shape, by first placing an un-cross-linked sheet over the mould; this un-cross-linked sheet is softened by the heat and by following the surface shape of the mould it can acquire the desired shape. Further, a bonding agent, a tackifier and the like may be used to allow firm bonding to the mould.

The cross-linked polymer composition of the present invention can be put to a wide range of uses, such as for all kinds of linings, industrial articles, all kinds of vibration controlling binder layers, reinforcing material for steel plate, and as a substitute for thermosetting resins.

The following Examples further illustrate the invention.

In the Examples and Comparative Experiments tests were carried out, in which an un-cross-linked rubber sheet is placed over a 80x40 mm oblong hole made in an iron plate of 1 mm thickness, upon which the temperature is raised, and after cross-linking, the extent of deformation caused by the sheet sagging through the hole was assessed.

Hardness was measured with the aid of JIS K-6301 hardness testers types A and C.

Bending strength was measured by means of a JIS standard process K-7203. Maximum deformation was expressed as the extent of deformation observed when the cross-linked sheet was bended until it collapsed.

Further, the characteristics of the aromatic vinyl compound-conjugated diene block copolymer (in the following chart to be referred to as block copolymer) and of the EVA are listed below.

| Block copolymer | Styrene content, % | EVA | Vinylacetate content, % | MI g/ 10 min |
|---|---|---|---|---|
| (a) JSR TR 2000 ex Jap. Synthetic Rubber | 40 | e) Ultrasen 540 ex Oriental Soda | 10 | 1.5 |
| (b) JSR TR 2400 ex Jap. Synthetic Rubber | 60 | f) Ultrasen 630 ex Oriental Soda | 15 | 1.5 |
| (c) Shell TR 1102 ex Shell | 28 | g) Ultrasen 631 ex Oriental Soda | 20 | 1.5 |
| (d) JSR SIS5000 ex Jap. Synthetic Rubber | 15 | h) Ultrasen 623 ex Oriental Soda | 20 | 20 |

Examples 1-5

These were Examples using sulphur for cross-linking. The aromatic vinyl compound-conjugated diene block polymers a)-d) and further compounding ingredients were mixed by means of a Banbury mixer type BR in the proportions given in Table 1 and were rolled into sheets of 2 mm thickness by means of a 25.4 cm test roller and the un-cross-linked sheets were subjected to cross-linking in a heat medium at 155° C for 25 min. The properties were tested and the results are given in Table 1.

Examples 6 and 8

These were Examples using peroxide cross-linking blends. The aromatic vinyl compound-conjugated diene block copolymers a)-c) and ethylene-vinyl acetate copolymers e)-h) were used with alternately, heavy calcium carbonate and talc as the filler. The cross-linked products were obtained in the same way as in Example 1. The properties were tested and the results are given in Tables 2 and 3.

Examples 7 and 9

These were also Examples using peroxide cross-linking blends. 80 pbw aromatic vinyl compound-conjugated diene block copolymers or diene vinyl acetate copolymers e)-h) and 20 pbw SBR (JSR 1502) were used. The cross-linked products were obtained in the same way as in Example 1. The properties were tested and the results are given in Tables 2 and 3.

Comparative Experiments 1 and 2

These Comparative Experiments were carried out using sulphur cross-linking blends. The cross-linked products were obtained in the same way as in Example 1, except that as the polymer, 100 pbw of SBR (JSR 1502, ex Japan Synthetic Rubber) or natural rubber was used. The properties were tested and the results are given in Table 1.

Comparative Experiments 3 and 4

These Comparative Experiments were carried out using peroxide cross-linking blends. The cross-linked products were obtained in the same way as in Example 1, except that as the polymer, SBR (JSR 1502, ex Japan Synthetic Rubber) was used and as the filler, alternately heavy calcium carbonate or talc. The properties were tested and the results are given in Table 2.

It will be seen from Tables 1, 2, and 3 that Examples 1-9 which are according to the present invention, as compared with Comparative Experiments 1-4, which are not according to the invention, show a great dare inspite of their high level of hardness. This is demonstrated by a non-cross-linked sheet according to the invention which is placed over a shaped plate material and subsequently cross-linked; its ability to follow the shape of the plate material is extremely good.

With the ingredients according to the present invention, a metal mould is not particularly needed as their mouldability is good even when cross-linked in a heat medium, so that a cross-linked product of the desired shape is obtained, and at the same time the cross-linked product is a product with a high level of hardness, so that it can be put to a wide range of uses, such as in linings, articles for industrial use, various kinds of vibration controlling binder layers, reinforcing materials for steel plate, as substitutes for thermo-setting resins.

EP 0 318 614 A1

TABLE 1

| | | Example 1 (a) | | | | Example 2 (b) | | Example 3 (c) | | | Example 4 (d) | | |
|---|---|---|---|---|---|---|---|---|---|---|---|---|---|
| Block copolymer | type | | | | | | | | | | | | |
| | amount | 100 | 50 | 50 | 100 | 100 | 100 | 70 | 100 | 70 | 100 | 70 | 100 |
| JSR RB 810 *-1 | | - | - | - | - | - | - | - | - | - | - | - | - |
| JSR 1502 *-2 | | - | 50 | - | - | - | - | 30 | - | - | - | 30 | - |
| NR (RSS No. 3) | | - | - | 50 | - | - | - | - | - | 30 | - | - | - |
| Zinc oxide No. 1 | | 10 | 10 | 10 | 10 | 10 | 10 | 10 | 10 | 10 | 10 | 10 | 10 |
| Stearic acid | | 0.2 | 0.2 | 0.2 | 0.2 | 0.2 | 0.2 | 0.2 | 0.2 | 0.2 | 0.2 | 0.2 | 0.2 |
| Heavy calcium carbonate | | 280 | 280 | 280 | 280 | 280 | 280 | 280 | 280 | 280 | 280 | 280 | 280 |
| FEF carbon black | | 3 | 3 | 3 | 3 | 3 | 3 | 3 | 3 | 3 | 3 | 3 | 3 |
| Naphthenic process oil | | 8 | 8 | 8 | 8 | 8 | 8 | 8 | 8 | 8 | 8 | 8 | 8 |
| PEG No. 4000 | | 0.5 | 0.5 | 0.5 | 0.5 | 0.5 | 0.5 | 0.5 | 0.5 | 0.5 | 0.5 | 0.5 | 0.5 |
| Sulphur | | 30 | 30 | 30 | 60 | 3 | 30 | 30 | 30 | 30 | 30 | 30 | 60 |
| Vulcanization accelerator TMTD | | 6.5 | 6.5 | 6.5 | 6.5 | 6.5 | 6.5 | 6.5 | 6.5 | 6.5 | 6.5 | 6.5 | 6.5 |
| Vulcanization accelerator OBS | | 4.0 | 4.0 | 4.0 | 4.0 | 4.0 | 4.0 | 4.0 | 4.0 | 4.0 | 4.0 | 4.0 | 4.0 |
| Total | | 442.2 | 442.2 | 442.2 | 472.2 | 415.2 | 442.2 | 442.2 | 442.0 | 442.0 | 442.2 | 442.2 | 472.2 |

EP 0 318 614 A1

TABLE 1 (cont'd)

| | | Example 1 | | | | Example 2 | | | | | Example 3 | Example 4 | | |
|---|---|---|---|---|---|---|---|---|---|---|---|---|---|---|
| Block copolymer type | | (a) | | | | (b) | | | (c) | | | (d) | | |
| Cross-linking conditions | | | | | | | | | | | | | | |
| Temperature | (°C) | 155 | 155 | 155 | 155 | 155 | 155 | 155 | 155 | 155 | | 155 | 155 | 155 |
| Time | (min) | 25 | 25 | 25 | 25 | 25 | 25 | 25 | 25 | 25 | | 25 | 25 | 25 |
| Characteristics | | | | | | | | | | | | | | |
| | (mm) | 12 | 6 | 5 | 13 | 10 | 9 | 7 | 10 | 8 | | 12 | 9 | 10 |
| Hardness of uncross-linked product (JIS.A) | | 85 | 72 | 69 | 85 | 85 | 90 | 81 | 85 | 74 | | 55 | 50 | 55 |
| Hardnes of cross-linked product (JIS.C) | | 80 | 73 | 72 | 85 | 35 | 85 | 77 | 80 | 75 | | 82 | 72 | 83 |
| Bending strength (kgf/mm$^2$) | | 1.7 | 1.4 | 1.4 | 1.9 | *6 | 1.9 | 1.5 | 1.7 | 1.5 | | 1.8 | 1.4 | 1.8 |
| Maximum deformation (mm) | | 9.0 | 9.2 | 9.2 | 5.5 | *6 | 5.5 | 9.1 | 9.0 | 9.2 | | 5.7 | 9.3 | 5.7 |

TABLE 1 (cont'd)

|  | Comparative Exp. 1 | Comparative Exp. 2 | Example 5 |
|---|---|---|---|
| Block copolymer type |  |  | (a) |
| amount | - | - | 70 |
| JSR RB 810 *-1 | - | - | 30 |
| JSR 1502 *-2 | 100 | - | - |
| NR (RSS No. 3) | - | 100 | - |
| Zinc oxide No. 1 | 10 | 10 | 10 |
| Stearic acid | 0.2 | 0.2 | 0.2 |
| Heavy calcium carbonate | 280 | 280 | 280 |
| FEF carbon black | 3 | 3 | 3 |
| Naphthenic process oil | 8 | 8 | 8 |
| PEG No. 4000 | 0.5 | 0.5 | 0.5 |
| Sulphur | 30 | 30 | 30 |
| Vulcanization accelerator TMTD | 6.5 | 6.5 | 6.5 |
| Vulcanization accelerator OBS | 4.0 | 4.0 | 4.0 |
| Total | 442.2 | 442.2 | 442.2 |

TABLE 1 (cont'd)

| | Comparative Exp. 1 | Comparative Exp. 2 | Example 5 |
|---|---|---|---|
| Block copolymer type | | | (a) |
| Cross-linking conditions | | | |
| Temperature (°C) | 155 | 155 | 155 |
| Time (min) | 25 | 25 | 25 |
| Characteristics | | | |
| (mm) | 1.3 | 1.5 | 14 |
| Hardness of uncross-linked product (JIS.A) | 40 | 41 | 85 |
| Hardnes of cross-linked product (JIS.C) | 71 | 70 | 80 |
| Bending strength (kgf/mm$^2$) | 1.2 | 1.3 | 1.8 |
| Maximum deformation (mm) | 8.7 | 9.5 | 8.9 |

TABLE 2

| Block copolymer | type | Example 6 | | | | | | Example 7 | Comp. | Comp. |
|---|---|---|---|---|---|---|---|---|---|---|
| | | (a) | | (b) | | (c) | | (a) | Exp. 3 | Exp. 4 |
| | amount | 100 | 100 | 100 | 100 | 100 | 100 | 80 | - | - |
| JSR 1502 | | - | - | - | - | - | - | 20 | 100 | 100 |
| Zinc oxide No. 1 | | 10 | 10 | 10 | 10 | 10 | 10 | 10 | 10 | 10 |
| Stearic acid | | 1 | 1 | 1 | 1 | 1 | 1 | 1 | 1 | 1 |
| Heavy calcium carbonate | | 250 | - | 250 | - | 250 | - | 250 | 250 | - |
| Talc | | - | 250 | - | 250 | - | 250 | - | - | 250 , |
| Naphthenic process oil | | 12 | 12 | 12 | 12 | 12 | 12 | 12 | 12 | 12 |
| Acrylate ester ED [*-4] | | 20 | 20 | 20 | 20 | 20 | 20 | 20 | 20 | 20 |
| PEG No. 4000 | | 1 | 1 | 1 | 1 | 1 | 1 | 1 | 1 | 1 |
| Percumyl D [*-5] | | 12 | 12 | 12 | 12 | 12 | 12 | 12 | 12 | 12 |
| Total | | 406 | 406 | 406 | 406 | 406 | 406 | 406 | 406 | 406 |

EP 0 318 614 A1

TABLE 2 (cont'd)

| Block copolymer type | | Example 6 (a) | | (b) | | (c) | | Example 7 (a) | Comp. Exp. 3 | Comp. Exp. 4 |
|---|---|---|---|---|---|---|---|---|---|---|
| Cross-linking conditions | | | | | | | | | | |
| Temperature | (°C) | 155 | 155 | 155 | 155 | 155 | 155 | 155 | 155 | 155 |
| Time | (min) | 25 | 25 | 25 | 25 | 25 | 25 | 25 | 25 | 25 |
| Characteristics | | | | | | | | | | |
| | (mm) | 17 | 14 | 16 | 12 | 17 | 14 | 15 | 1.5 | 0.8 |
| Hardness of uncross-linked prod. (JIS.A) | | 46 | 51 | 47 | 53 | 46 | 50 | 43 | 31 | 34 |
| Hardness of cross-linked prod. (JIS.C) | | 80 | 84 | 82 | 86 | 80 | 84 | 78 | 18 | 19 |
| Bending strength (kgf/mm$^2$) | | 3.0 | 4.8 | 3.2 | 5.0 | 2.9 | 4.9 | 2.9 | *-6 | *-6 |
| Maximum deformation (mm) | | 8.2 | 5.9 | 8.0 | 5.6 | 8.3 | 6.0 | 8.2 | *-6 | *-6 |

*-3 Japan Talc

*-4 Ethylene glycol dimethacrylate, Seiko

*-5 Dicumylperoxide, Nippon Jushi

TABLE 3

| EVA | type | Example 8 | | | | | | | | Comp. Exp. 5 |
| | | (e) | | (f) | | (g) | | (h) | | (f) |
| | amount | 100 | 100 | 100 | 100 | 100 | 100 | 100 | 100 | 80 |
| JSR 1502 | | - | - | - | - | - | - | - | - | 20 |
| Zinc oxide No. 1 | | 10 | 10 | 10 | 10 | 10 | 10 | 10 | 10 | 10 |
| Stearic acid | | 1 | 1 | 1 | 1 | 1 | 1 | 1 | 1 | 1 |
| Heavy calcium carbonate | | 250 | - | 250 | - | 250 | - | 250 | - | 250 |
| Talc SW [*-3] | | - | 250 | - | 250 | - | 250 | - | 250 | - |
| Naphthenic process oil | | 12 | 12 | 12 | 12 | 12 | 12 | 12 | 12 | 12 |
| Acrylate ester ED [*-4] | | 20 | 20 | 20 | 20 | 20 | 20 | 20 | 20 | 20 |
| PEG No. 4000 | | 1 | 1 | 1 | 1 | 1 | 1 | 1 | 1 | 1 |
| Percumyl D [*-5] | | 8 | 8 | 8 | 8 | 8 | 8 | 8 | 8 | 8 |
| Total | | 402 | 402 | 402 | 402 | 402 | 402 | 402 | 402 | 402 |

EP 0 318 614 A1

TABLE 3 (cont'd)

| | | Example 8 | | | | | | | | Comp. Exp. 5 |
|---|---|---|---|---|---|---|---|---|---|---|
| EVA | type | (e) | | (f) | | (g) | | (h) | | (f) |
| Cross-linking conditions | | | | | | | | | | |
| Temperature | (°C) | 155 | 155 | 155 | 155 | 155 | 155 | 155 | 155 | 155 |
| Time | (min) | 25 | 25 | 25 | 25 | 25 | 25 | 25 | 25 | 25 |
| Characteristics | | | | | | | | | | |
| | (mm) | 10 | 8 | 9 | 8 | 8 | 7 | 10 | 9 | 10 |
| Hardness of uncross-linked prod. (JIS.A) | | 88 | 90 | 89 | 92 | 90 | 93 | 89 | 92 | 87 |
| Hardness of cross-linked prod. (JIS.C) | | 60 | 62 | 61 | 63 | 61 | 64 | 60 | 64 | 58 |
| Bending strength (kgf/mm$^2$) | | 1.2 | 1.3 | 1.2 | 1.3 | 1.2 | 1.4 | 1.0 | 1.4 | 1.3 |
| Maximum deformation (mm) | | 15 | 14 | 15 | 14 | 15 | 13 | 18 | 14 | 13 |

Claims

1. Cross-linked polymer compositions characterized in that they have been obtained by cross-linking in a heat medium of a mixture comprising

(A) in the range of from 40 to 100% by weight of a block copolymer of an aromatic vinyl compound and conjugated diolefin and/or an ethylene-vinyl acetate copolymer and

13

(B) in the range of from 0 to 60% by weight of a non-cured rubber chosen from natural rubber, diene-type synthetic rubber and non-diene-type synthetic rubber,

the sum of the percentage of (A) and (B) being 100, and, calculated on 100 parts by weight of mixture [(A) + (B)],

(C) in the range of from 0 to 100 parts by weight of a rubber softener and

(D) in the range of from 0 to 600 parts by weight of a filler.

2. The cross-linked polymer as claimed in claim 1, characterized in that it has a hardness of more than 55 according to the JIS K-6301 JIS-C hardness test.

3. The cross-linked polymer composition as claimed in claim 1 or 2 which comprises 70-100% by weight of component (A) and 30-0% by weight of component (B).

4. The cross-linked polymer composition as claimed in any one of the preceding claims in which the ethylene-vinyl acetate copolymer has a content of vinyl acetate of 5-45% by weight.

5. The cross-linked polymer composition as claimed in any one of the preceding claims in which the rubber softener is present in a content of 5-30 parts by weight.

6. The cross-linked polymer composition as claimed in any one of the preceding claims in which the filler is present in a content of 0-400 parts by weight.

7. The cross-linked polymer composition as claimed in any one of the preceding claims in which the aromatic vinyl compound and conjugated diolefin are styrene and 1,3-butadiene, respectively.

8. The cross-linked polymer composition as claimed in any one of the preceding claims in which the block copolymer contains in the range of from 5 to 60% by weight of aromatic vinyl compound.

9. The cross-linked polymer composition as claimed in any one of the preceding claims which has been obtained by cross-linking in a hot gas.

10. Articles whenever containing a cross-linked polymer composition as claimed in any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 220 599 (PHILLIPS PETROLEUM) <br> * Claim 1; examples * | 1-3,5-10 | C 08 L 53/02 <br> C 08 L 23/08 <br> C 08 K 5/00 |
| X | US-A-3 417 044 (ROSS et al.) <br> * Claims 1-3; column 2, lines 37-46 * | 1,3,5-8,10 | |
| X | FR-A-2 016 971 (THE BRITISH PETRO-LEUM CY.) <br> * Claims 1,4,6 * | 1,3,6-8,10 | |
| X | DE-A-1 963 038 (ASAHI KASEI K.K.K.) <br> * Examples; page 22, table * | 1-3,5-10 | |
| X | DE-A-3 339 385 (BAYER) <br> * Whole document * | 1,3-6,10 | TECHNICAL FIELDS SEARCHED (Int. Cl.4) <br><br> C 08 L <br> C 08 K <br> C 08 F <br> C 08 J |
| X | FR-A-2 264 825 (DYNAMIT NOBEL) <br> * Claims * | 1,3-6,9,10 | |
| X | FR-A-1 258 665 (BAYER) <br> * Whole document * | 1,3-6,10 | |

The present search report has been drawn up for all claims

| Place of search | Date of completion of the search | Examiner |
|---|---|---|
| The Hague | 19-12-1988 | MEULEMANS |

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## X  LACK OF UNITY OF INVENTION

The Search Division considers that the present European patent application does not comply with the requirement of unity of invention and relates to several inventions or groups of inventions,

namely:

1. Claims 1-3,5-10: All claims as far as related to block copolymers of an aromatic vinyl compound and conjugated diolefin

2. Claims 1-6,9,10: All claims as far as related to ethylene-vinylacetate copolymers

3. Claims 1-10: All claims as far as related to mixtures of a block copolymer of an aromatic vinyl compound and conjugated diolefin and an ethylene-vinylacetate copolymer

☒ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☐ None of the further search fees has been paid within the fixed time limit. The present European search report has been drawn up for those parts of the European patent application which relate to the invention first mentioned in the claims,

namely claims: